# EUROPEAN PATENT SPECIFICATION

(11) **EP 1 288 319 B1**
(45) Date of publication and mention of the grant of the patent: **30.06.2004**
(21) Application number: 01203312.2
(22) Date of filing: 03.09.2001
(51) Int. Cl.: C22B 21/06, C22B 9/00

(54) **Method for the purification of an aluminium alloy**
Verfahren zum Reinigen einer Aluminium-Legierung
Méthode de purification d'un alliage d'aluminium

(43) Date of publication of application: 05.03.2003
(73) Proprietor: Corus Technology BV, 1970 CA IJmuiden (NL)
(72) Inventor: De Vries, Paul Alexander, 2102 GM Heemstede (NL)
(74) Representative: Hansen, Willem Joseph Maria

(56) References cited:
- EP-A- 0 375 308
- EP-A- 0 745 693
- US-A- 4 273 627
- US-A- 4 411 747
- US-A- 4 456 480
- US-A- 4 744 823
- PATENT ABSTRACTS OF JAPAN vol. 1995, no. 06, 31 July 1995 (1995-07-31) -& JP 07 070666 A (NIPPON LIGHT METAL CO LTD;OTHERS: 01), 14 March 1995 (1995-03-14)
- PATENT ABSTRACTS OF JAPAN vol. 004, no. 085 (C-015), 18 June 1980 (1980-06-18) -& JP 55 050442 A (KOBE STEEL LTD), 12 April 1980 (1980-04-12)
- PATENT ABSTRACTS OF JAPAN vol. 010, no. 103 (C-340), 18 April 1986 (1986-04-18) -& JP 60 234930 A (TOYOTA JIDOSHA KK), 21 November 1985 (1985-11-21)

## Description

The invention relates to a method for the purification of an aluminium alloy.

A known method is fractional crystallisation, which can be applied to purify e.g. an aluminium alloy contaminated with an alloying element such as iron. In fractional crystallisation an input stream of an aluminium alloy scrap material, which, for a certain alloying element or contaminant, is hypoeutectic in composition, is split into a first output stream or product stream of purified aluminium and a second output stream or downgrade stream, which is more contaminated with the contaminant than the input stream and has a composition closer to the eutectic composition for the contaminant.

The document JP-A-7 70666 discloses a process to continuously produce a hypoeutectic Al-Si alloy and a hypereutectic Al-Si alloy from aluminum scrap at a high yield. The aluminum scrap is melted and iron removal is executed with an iron removing furnace. From the iron-removed molten metal, an hypoeutectic Al-Si alloy is obtained with a refining furnace. From the remaining molten metal, an hypereutectic Al-Si alloy is obtained in a pre-treating furnace while separating Fe content as an intermetallic compound, i.e. a process of separation of intermetallics. In the refining furnace, the hypoeutectic Al-Si alloy having Si concentration corresponding to each grade is obtained. In the pre-treating furnace, the hypereutectic Al-Si alloy having high Si concentration is obtained.

Where in this description reference is made to fractional crystallisation, this is to be understood as comprising all forms of fractional crystallisation and all other purification methods starting from a hypoeutectic alloy, whereby the composition of the downgrade stream is determined by the eutectic composition of aluminium and an alloying element.

A problem of fractional crystallisation is that the maximum content of contaminant in the downgrade stream is determined by the eutectic composition. In the event of an input stream of aluminium contaminated with 0.5% Fe, and a Fe content of the product stream of less than 0.1%, the downgrade stream, having an increased Fe content, is more than 25% of the input stream.

As can readily be seen from the Al-Fe phase diagram, the purer the product stream is made, the less contaminated the downgrade stream will be. However, for an economic process a low volume of a highly contaminated downgrade stream is desirable.

The performance of a basic fractional crystallisation process can be improved by using a multistage or counter current fractional crystallisation process but the limit for the contamination of the downgrade stream with the alloying element is determined by the eutectic composition.

In general, the material of the product stream has a higher economic value than the material of the original aluminium alloy, whereas the material of the downgrade stream has a lower economic value. In the present market for the most common aluminium alloys, the loss in value of the higher contaminated downgrade stream, as compared to the value of the original aluminium alloy, is not compensated by the increase of the economic value of the product stream. The demand in the market for the material of the downgrade stream from the fractional crystallisation process is fairly low, so if it would be produced in large amounts, the economic value thereof will drop fast. Therefore, the process of fractional crystallisation, or in fact any other separation process wherein the input waste stream results in a more purified and a more contaminated stream of eutectic or near eutectic composition is to date economically not feasible.

An object of the invention is to provide a method for the purification of an aluminium alloy that is economically more feasible. This and other objects are achieved with a method for the purification of an aluminium alloy containing an alloying element or contaminant wherein the aluminium alloy is subjected to a fractional crystallisation process wherein at least the aluminium alloy is separated into a product stream having a content of the alloying element less than the content of the alloying element in the aluminium alloy and a downgrade stream having a content of the alloying element higher than the content of the alloying element in the aluminium alloy and wherein the downgrade stream is subjected to a process of separation of intermetallics wherein an additive is added to the downgrade stream to form a mixture containing aluminium-alloying element-additive intermetallics and from this mixture a waste stream and a recycle stream is separated which waste stream contains a higher content of the alloying element than the recycle stream and the recycle stream is at least partly fed into the fractional crystallisation process. The method according to the invention combines a hypoeutectic process, like fractional crystallisation (FC), with a hypereutectic process, like separation of intermetallics (SIM). The waste stream comprises solid Al-alloying element-additive intermetallics, the recycle stream is basically a liquid aluminium stream containing less of the alloying element than the downgrade component. A frequently occurring alloying element is Fe.

The principle of SIM processes is known in the art of metallurgy and comprises such processes as layer crystallisation, filtration, magnetic separation, hydro cyclonage and precipitation in molten salts.

The downgrade stream of the FC process is used as an input stream for the SIM process. In this SIM process an additive is added. The additive is selected such that it effectively lowers the eutectic composition of the alloying element and aluminium such as the eutectic composition of Fe and aluminium.

The downgrade stream of the fractional crystallisation process is made into a hypereutectic mixture by adding the additive thereto. In the SIM process the mixture is split into a waste stream with a high content of the additive and the alloying element and a recycle stream with a lower composition of the alloying element. This recycle stream is mixed with the input stream of the aluminium alloy.

The method of the invention opens a new, much more economic, way to the purification of aluminium alloys, in particular suitable for aluminium alloys of a composition typical in the field of scrap recycling.

Other advantages of the method are the economy of volume, synergetic advantages by process integration, lower sensitivity to variation of aluminium prices and environmental sustainability. The method stays economically profitable even when applied on a very large scale.

The method of the invention uses the separation of intermetallics process to purify the downgrade of the FC process and the FC process to purify at least part of the product stream (recycle stream) of the SIM process. The fundamental impossibility to cross the eutectic for the FC process and the SIM process separately is circumvented by introducing a recycle loop in the process of the invention. The, nearer to the eutectic, downgrade stream of the FC process is made hypereutectic by adding the additive. The, nearer to the eutectic, product stream (recycle stream) of the SIM process is made hypoeutectic by diluting the additive through addition of aluminium alloy material to be purified. The result of the process is at least partial removal of the alloying element from the aluminium alloy with a small resulting waste stream with a content of the alloying element above eutectic.

For economic reasons, a smaller, highly impure waste stream is preferred over a larger less contaminated waste stream. However, Al-Fe- additive intermetallics contain a high amount of aluminium. In the usual, separately applied, process of separation of intermetallics, the solid-liquid separation would imply an even greater loss of aluminium. Also, the waste stream is not particularly valuable. It contains quite substantial amounts of iron, making it applicable to low-end uses only. Further, the product stream (recycle stream) of the separation of intermetallic process, which is the purified stream, is near eutectic in composition. There is only a very small market for an aluminium alloy comprising a, near, eutectic amount of the alloying element such as Fe in aluminium. Consequently, the present market cannot absorb the offered amount leading to a low price, which makes the process not feasible for large-scale industrial application. For these reasons, also the SIM process, when applied separately, is not economically feasible.

Different from this, the process of the invention only produces a small waste stream. Therefore, it does not suffer from the problems described above that the waste stream of each of the separate processes, SIM process and FC process, is large compared to the demand in the market. Hence, large-scale application of the process of the invention only to a small extent influences the value of the waste stream and the profitability of the total process.

The mass balance of the process of the invention may limit the proportion of the product stream from the SIM process that can be fed back into the fractional crystallization process as recyle. Part of the liquid product stream then remains with the intermetallics formed. Preferably, at least part of the liquid aluminium is separated from the intermetallics in a subsequent separation process.

As mentioned above, the fractional crystallisation process in itself is not at present economic, in particular not for high volume applications.

However, by combining the two processes according to the invention a highly purified product stream and a waste stream, smaller than in the separate processes, containing a large quantity of the alloying element and the additive is obtained. This small waste stream can be used e.g. as a de-oxidising or alloying agent in the steel making industry or the intermetallics can be decomposed by electrolysis and the constituents can be recovered. The product stream is a high value starting material for high quality aluminium alloys. Therefore, the combination of two, in themselves not economically feasible, processes into one combined process leads to an economically feasible, new and inventive process.

A preferred embodiment is characterised in that the additive comprises at least one element chosen from Si, Mn, Cu, Co and Ni. These elements as additive, added either individually or in combination, easily form intermetallics with many alloying elements used in the aluminium industry and yield a high removal efficiency. This applies in particular but not restricted thereto when the alloying element to be removed is Fe.

A further embodiment is characterised in that the additive comprises mainly Mn. When using mainly Mn as the additive, a considerable reduction in the amount of waste stream can be obtained, in particular but not restricted thereto in the event that the alloying element is Fe.

The invention is of particular interest in the event the alloying element is Fe.

Contamination of aluminium by iron occurs during use or manufacture of aluminium products or accumulates in other recycle processes. Iron has an adverse effect on formability and fracture mechanics of aluminium alloy products and therefore can only be tolerated in small amounts.

Preferably, when Fe is the alloying element to be removed, the Fe content in the aluminium alloy is less than 1.7 weight %, more preferably less than 1.5 weight %. In case the Fe content is still closer to the eutectic value, the possible increase of Fe content in the downgrade stream of the FC process compared to the Fe content in the input stream is too low to make the overall process economicly feasible.

Preferably, when Fe is the alloying element the Fe content in the aluminium alloy is more than 0.4 weight %, preferably more than 0.5% weight %.

At lower Fe content of the input stream of the aluminium alloy to be purified, no substantial decrease of the amount of the waste stream is obtained since the recycle stream from the SIM process contains, dependent on the additive used, also about 0.5% Fe.

The invention will be illustrated by comparing the amount and composition of a waste stream and product stream for the fractional crystallisation process and the process of our invention.

In Table 1 the composition of an aluminium alloy is given. The mass is assumed to be one unit, e.g. 1000 kg.

**Table 1:**

| aluminium alloy (scrap) composition | | | | |
|---|---|---|---|---|
| | **mass** | **wt% Al** | **wt% Fe** | **wt% Mn** |
| scrap | 1.000 | 99.50 | 0.50 | 0.00 |

For the case that the scrap is purified using the FC process, the resulting product stream and waste stream compositions and masses are given in Table 2. As can be seen, the waste mass is about 25% of the original scrap mass.

**Table 2:**

| product and waste mass and composition by applying FC to the scrap of Table 1 | | | | |
|---|---|---|---|---|
| **FC** | **mass** | **wt% Al** | **wt% Fe** | **wt% Mn** |
| product | 0.754 | 99.94 | 0.06 | 0.00 |
| waste | 0.246 | 98.15 | 1.85 | 0.00 |

Table 3 shows the result when our invention is applied to the scrap by adding an additive like manganese to the downgrade stream of the FC process and feeding back at least part of the product stream from the SIM process as recycle to the input of the FC process. The table shows that the waste is reduced to less than 17% of the input scrap mass. It is assumed that at least the intermetallic Al 6 [Fe, Mn] is formed.

The waste, according to Table 3, is about 17% of the input mass. The amount of recycle that can be fed back into the FC process is determined by mass balance consideration and in many cases does not comprise the total amount of product from the SIM-process.

The amount of waste can be further reduced by further separating in a separate process aluminium, preferably in liquid form, from the intermetallics.

Adding an additional separating process also has the advantage of a greater flexibility in the selection of the applied SIM-process. A less effective SIM-process, having a lower separation capability, but at lower costs can be applied. Further separation can then be performed by the additional separation process.

**Table 3:**

| Product, waste and additive mass by applying the process of the invention to the scrap of Table 1 | | | | |
|---|---|---|---|---|
| **XEP** | **mass** | **wt% Al** | **wt% Fe** | **wt% Mn** |
| product | 0.839 | 99.91 | 0.06 | 0.03 |
| waste | 0.167 | 93.70 | 2.70 | 3.60 |
| additive | 0.006 | 0.00 | 0.00 | 100.00 |

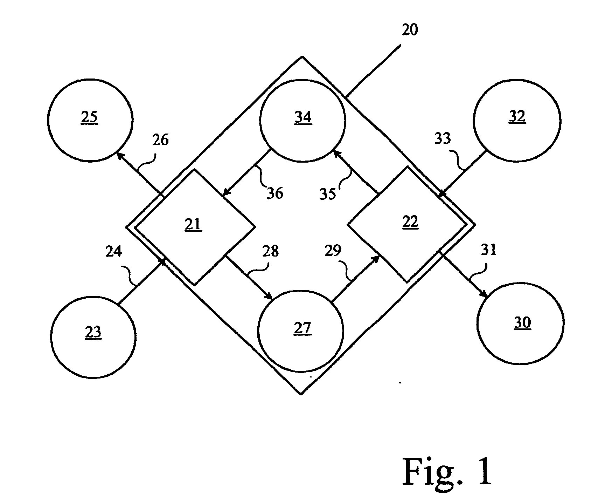

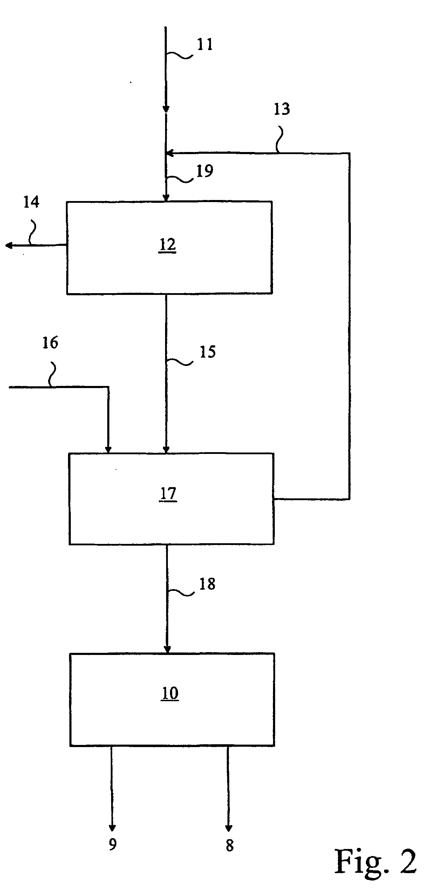

The invention will now be illustrated with reference to the drawing in which Fig. 1 shows the principle of the invention and Fig. 2 shows in a diagrammatic representation of an embodiment of the invention.

In Fig. 1 the basic processes of the method of the invention are enclosed by square 20. The processes comprise a FC process, indicated by numeral 21, and a SIM process, indicated by numeral 22. Scrap to be cleaned indicated by numeral 23 is fed through a line 24 into the FC process 21. The obtained purified product is indicated by numeral 25 and is removed from the FC process through line 26. The downgrade 27 is exported from the FC process through line 28 and fed into the SIM process 22 through line 29. A waste component 30 from the SIM process is taken from the SIM process through line 31. Additive 32 is fed into the SIM process through line 33. The recycle component 34 is taken from SIM process 22 through line 35 and fed into the FC process through line 36.

In Fig. 2 reference number 11 indicates a supply line through which a stream of an aluminium alloy, as scrap, preferably in molten form, containing an alloying element is fed to a first process vessel 12 in which the fractional crystallisation process is performed. This fractional crystallisation process may be chosen to be a known embodiment of fractional crystallisation. Connected to supply line 11 is a return line 13 the function of which will be described later. The supply line 11 and return line 13 merge into an input line 19, which is coupled to process vessel 12. In the fractional crystallisation process the mixture of aluminium alloy and downgrade stream is separated into a product component, which is removed through product line 14, and a residual component that is extracted from process vessel 12 through waste line 15. Waste line 15 is connected to a second process vessel 17, to which also a feed line 16 is connected. Through feedline 16, an additive, such as Mn, is fed into the second process vessel 17. A separation of intermetallics process is performed in second process vessel 17. A waste stream, containing a high quantity of the alloying element, such as Fe, and also containing Mn, is removed through waste line 18. Also connected to second process vessel 17 is the return line 13 through which a, purified, off-stream of the second process is fed back as a recyle into process vessel 12.

Optionally, the waste stream is fed through line 18 into a subsequent separation process 10 in which aluminium, in liquid or solid form, is separated from intermetallics. By this additional separation process the amount of waste removed through line 9 can be further reduced and a higher amount of purified aluminium, taken out through line 8, can be obtained.

The total combined process has as input-streams the stream of aluminium alloy to be cleaned, and the stream of additive and as output-stream the waste stream and the product component.

## Claims

1. Method for the purification of an aluminium alloy containing an alloying element wherein the aluminium alloy is subjected to a fractional crystallisation process wherein at least the aluminium alloy is separated into a product stream having a content of the alloying element less than the content of the alloying element in the aluminium alloy and a downgrade stream having a content of the alloying element higher than the content of the alloying element in the aluminium alloy and wherein the downgrade stream is subjected to a process of separation of intermetallics wherein an additive is added to the downgrade stream to form a mixture containing intermetallics formed and from this mixture a waste stream and a recycle stream is separated which waste stream contains a higher content of the alloying element than the recycle stream and the recycle stream is fed at least partly into the fractional crystallisation process.

2. Method according to any of the preceding claims, wherein the additive comprises at least one element chosen from Si, Mn, Cu, Co and Ni.

3. Method according to any of the preceding claims, wherein the additive comprises mainly Mn.

4. Method according to any of the preceding claims, wherein the alloying element is Fe.

5. Method according to claim 4, wherein the Fe content in the aluminium alloy is less than 1.7 weight %, preferably less than 1.5 weight%.

6. Method according to claim 4 or 5, wherein the Fe content in the aluminium alloy is more than 0.4 weight%, preferably more than 0.5 weight%.

## Patentansprüche

1. Verfahren zum Reinigen einer Aluminiumlegierung, welche ein Legierungselement enthält, wobei die Aluminiumlegierung einem fraktionierten Kristallisierungsverfahren unterworfen wird, wobei wenigstens die Aluminiumlegierung in einen Produktstrom mit einem Gehalt des Legierungselements, der geringer als der Gehalt des Legierungselements in der Aluminiumlegierung ist, und einen Abreicherungsstrom mit einem Gehalt des Legierungselements getrennt wird, der höher als der Gehalt des Legierungselements in der Aluminiumlegierung ist, und wobei der Abreicherungsstrom einem Verfahren zur Abtrennung von intermetallischen Phasen unterworfen wird, wobei ein Additiv dem Abreicherungsstrom zugegeben wird, um eine Mischung zu bilden, welche die gebildeten intermetallischen Phasen enthält, und aus dieser Mischung ein Abfallstrom und ein Recyclestrom abgetrennt wird, wobei der Abfallstrom einen höheren Gehalt des Legierungselements als der Recyclestrom enthält, und der Recyclestrom wenigstens teilweise dem fraktionierten Kristallisierungsverfahren zugeführt wird.

2. Verfahren nach Anspruch 1, bei welchem das Additiv wenigstens ein aus Si, Mn, Cu, Co und Ni gewähltes Element aufweist.

3. Verfahren nach einem der vorhergehenden Ansprüche, bei welchem das Additiv hauptsächlich Mn aufweist.

4. Verfahren nach einem der vorhergehenden Ansprüche, bei welchem das Legierungselement Fe ist.

5. Verfahren nach Anspruch 4, bei welchem der Fe-Gehalt in der Aluminiumlegierung weniger als 1,7 Gew.-%, bevorzugt weniger als 1,5 Gew.-% beträgt.

6. Verfahren nach Anspruch 4 oder 5, bei welchem der Fe-Gehalt in der Aluminiumlegierung mehr als 0,4 Gew.-%, bevorzugt mehr als 0,5 Gew.-% beträgt.

## Revendications

1. Procédé de purification d'un alliage d'aluminium contenant un élément d'alliage, dans lequel l'alliage d'aluminium est soumis à un processus de cristallisation fractionnée dans lequel au moins l'alliage d'aluminium est séparé en un courant de produit ayant une teneur en élément d'alliage inférieure à la teneur de l'élément d'alliage dans l'alliage d'aluminium et un courant de qualité inférieure ayant une teneur en élément d'alliage supérieure à la teneur en élément d'alliage dans l'alliage d'aluminium, et dans lequel le courant de qualité inférieure subit un processus de séparation de composés intermétalliques au cours duquel un additif est ajouté au courant de qualité inférieure pour former un mélange contenant des composés intermétalliques formés et, de ce mélange, un courant de déchet et un courant de recyclage sont séparés, lequel courant de déchet a une plus forte teneur en élément d'alliage que le courant de recyclage, et le courant de recyclage est soumis au moins partiellement au processus de cristallisation fractionnée.

2. Procédé selon la revendication précédente, dans lequel l'additif comporte au moins un élément choisi parmi Si, Mn, Cu, Co et Ni.

3. Procédé selon l'une quelconque des revendications précédentes, dans lequel l'additif comprend principalement Mn.

4. Procédé selon l'une quelconque des revendications précédentes, dans lequel l'élément d'alliage est Fe.

5. Procédé selon la revendication 4, dans lequel la teneur en Fe dans l'alliage d'aluminium est inférieure à 1,7% en poids, de préférence inférieure à 1,5% en poids.

6. Procédé selon la revendication 4 ou 5, dans lequel la teneur en Fe dans l'alliage d'aluminium est supérieure à 0,4% en poids, de préférence supérieure à 0,5% en poids.
